# FASCICULE DE BREVET EUROPEEN

(11) **EP 4 021 772 B1**
(45) Date de publication et mention de la délivrance du brevet: **15.11.2023**
(21) Numéro de dépôt: 20753398.5
(22) Date de dépôt: 15.07.2020
(51) Int. Cl.: B60W 30/14

(54) **PROCÉDÉ DE SÉLECTION DE LA VALEUR D'UNE LIMITATION DE VITESSE POUR UN RÉGULATEUR DE VITESSE D'UN VÉHICULE TERRESTRE**
VERFAHREN ZUR AUSWAHL DES GESCHWINDIGKEITSBEGRENZUNGSWERTES FÜR EINEN GESCHWINDIGKEITSREGLER EINES LANDFAHRZEUGES
METHOD FOR SELECTING THE SPEED RESTRICTION VALUE FOR A SPEED CONTROLLER OF A LAND VEHICLE

(30) Priorité: 28.08.2019 FR 1909445
(43) Date de publication de la demande: 06.07.2022
(73) Titulaire: PSA Automobiles SA, 78300 Poissy (FR)
(72) Inventeur: DESCHAMPS, Vincent, 92240 MALAKOFF (FR)
(86) Numéro de dépôt international: PCT/FR2020/051267
(87) Numéro de publication internationale: WO 2021/038147

(56) Documents cités:
- DE-A1-102011 113 909
- DE-A1-102015 000 392
- DE-A1-102016 119 135
- FR-A1- 2 755 650
- FR-A1- 2 890 610
- FR-B1- 2 890 610
- US-A1- 2010 188 288

## Description

La présente invention concerne un procédé de sélection de la valeur d'une limitation de vitesse pour un régulateur de vitesse d'un véhicule terrestre. L'invention concerne également un régulateur de vitesse apte à mettre en oeuvre ledit procédé.

Il est connu de l'état de la technique l'utilisation de régulateurs de vitesse afin de s'assurer qu'un véhicule automobile respecte les limitations de vitesse de la voie de circulation qu'il emprunte. Généralement, les valeurs de limitation de vitesse sont acquises en temps réel par le régulateur de vitesse à l'aide d'un dispositif de détection optique, permettant d'identifier la valeur de la limitation de vitesse inscrite sur un panneau de signalisation présent le long de la voie de circulation. Afin d'offrir une régulation plus souple de la vitesse, le régulateur de vitesse peut également anticiper les changements de valeurs de limitation de vitesse, à l'aide d'un dispositif de géolocalisation et d'une base de données associant à une position de géolocalisation une valeur de limitation de vitesse, comme cela est décrit dans le document FR3064967. Ainsi, le régulateur de vitesse peut identifier sur le trajet du véhicule automobile une zone où la vitesse limite est réduite, se trouvant au-delà du champ de vision du dispositif de détection optique. Cela permet au régulateur de vitesse de diminuer progressivement la valeur de la vitesse limite imposée au véhicule automobile, afin que celle-ci soit adaptée lorsque le véhicule automobile atteint ladite zone. Dans le cas où la valeur de la vitesse limite augmente dans la zone identifiée, le régulateur de vitesse limite la vitesse du véhicule automobile à cette nouvelle valeur lorsque le véhicule pénètre dans ladite zone. Par mesure de sécurité, le régulateur de vitesse est paramétré pour appliquer en temps réel et en premier, les valeurs de limitation de vitesse inscrites sur les panneaux de signalisation présents le long du trajet du véhicule automobile.

On connait par le document DE102015000392 un véhicule automobile et procédé de fonctionnement d'un système de régulation de vitesse. On connait par le document DE102011113909 une méthode de limitation de vitesse pour véhicule.

Parfois, les valeurs de limitation de vitesse inscrites sur les panneaux de signalisation peuvent s'appliquer à une partie des voies de circulation seulement. C'est par exemple le cas lorsque des voies de circulation dans un même sens sont séparées par un muret. Les voies de circulation situées à gauche du muret peuvent être limitées à 90 km/h par exemple, alors que les voies situées à droite du muret peuvent être limitées à 50 km/h. Un panneau de circulation présent sur le muret, rappelant la vitesse limite de 50 km/h pour les voies situées à droite du muret sera alors interprété par le régulateur de vitesse d'un véhicule automobile circulant sur une voie de circulation située à gauche du muret comme une nouvelle valeur de consigne. Le régulateur de vitesse imposera alors un ralentissement brusque du véhicule automobile au niveau de ce panneau de signalisation. Afin de maintenir l'allure du véhicule automobile, le conducteur est alors obligé de corriger la valeur de la vitesse limite du régulateur de vitesse. Pour cela, le conducteur doit sélectionner manuellement une nouvelle valeur de vitesse limite, en détournant son attention de la route au profit du régulateur de vitesse.

L'invention vise à remédier à ce problème en proposant un procédé de sélection de vitesse moins contraignant pour le conducteur ainsi que plus sûr par rapport à l'état de la technique.

Pour cela, l'invention propose un procédé de sélection de la valeur d'une limitation de vitesse, pour un régulateur de vitesse d'un véhicule terrestre, mettant en oeuvre les étapes suivantes:
- identification d'une première valeur de limitation de vitesse, à partir d'une position de géolocalisation et d'une base de données associant à une position de géolocalisation une valeur de limitation de vitesse ;
- identification d'une seconde valeur de limitation de vitesse, à partir d'au moins une image d'un panneau de signalisation de limitation de vitesse ;
- identification de la valeur de limitation de vitesse la plus basse entre la première valeur et la seconde valeur de limitation de vitesse ;
- sélection de la valeur de limitation de vitesse la plus élevée entre la première valeur et la seconde valeur de limitation de vitesse identifiée, lorsque la pédale d'accélération est actionnée afin d'augmenter la vitesse du véhicule terrestre et que la différence entre la valeur de la vitesse du véhicule terrestre et la valeur de limitation de vitesse la plus élevée identifiée est inférieure à une valeur seuil.

De préférence, la valeur seuil est comprise entre 95% et 105% de la valeur de limitation de vitesse la plus élevée identifiée.

Selon un autre mode de réalisation de l'invention, la valeur de limitation de vitesse sélectionnée est transmise à un régulateur de vitesse d'un véhicule terrestre, de préférence à un limiteur de vitesse, afin de limiter la vitesse de déplacement d'un véhicule terrestre à cette valeur sélectionnée. Par véhicule terrestre, on entend notamment un véhicule automobile.

L'invention concerne également un programme informatique comportant des instructions pour la mise en oeuvre d'un procédé de sélection décrit ci-dessus, lorsque ces instructions sont exécutées par un processeur.

L'invention concerne également un régulateur de vitesse, de préférence un limiteur de vitesse pour véhicule terrestre, comprenant un processeur et une unité de mémorisation, l'unité de mémorisation comprend les étapes suivantes d'un procédé de sélection de la valeur d'une limitation de vitesse :
- identification d'une première valeur de limitation de vitesse à partir d'une position de géolocalisation et d'une base de données associant à une position de géolocalisation une valeur de limitation de vitesse ;
- identification d'une seconde valeur de limitation de vitesse à partir d'au moins une image d'un panneau de signalisation de limitation de vitesse ; - identification de la valeur de limitation de vitesse la plus basse entre la première valeur et la seconde valeur de limitation de vitesse ;
- sélection de la valeur de limitation de vitesse la plus élevée entre la première valeur et la seconde valeur de limitation de vitesse identifiée, lorsque la pédale d'accélération est actionnée afin d'augmenter la vitesse du véhicule terrestre et que la différence entre la valeur de la vitesse du véhicule terrestre et la valeur de limitation de vitesse la plus élevée identifiée est inférieure à une valeur seuil ; et le processeur est apte à mettre en oeuvre les étapes du procédé mémorisées par l'unité de mémorisation.

Selon une variante de réalisation, le processeur du régulateur de vitesse est connecté à un module de géolocalisation, une caméra, un module de consultation d'une base de données associant à une position de géolocalisation une valeur de limitation de vitesse, et un capteur de la position d'une pédale d'accélération d'un véhicule terrestre.

L'invention concerne également un véhicule terrestre et plus particulièrement un véhicule automobile, comprenant un régulateur de vitesse ou un limiteur de vitesse tel que décrit ci-dessus.

L'invention sera mieux comprise à la lecture de la description qui va suivre, donnée uniquement à titre d'exemple non limitatif et faite en se référant aux dessins dans lesquels :
[Fig. 1] représente une vue schématique d'un véhicule automobile comprenant un régulateur de vitesse, apte à mettre en oeuvre un procédé de sélection de la valeur d'une limitation de vitesse selon l'invention ;
[Fig. 2] représente une vue schématique des composants du régulateur de vitesse illustré sur la figure 1 ;
[Fig. 3] représente une vue schématique des étapes mises en oeuvre par un procédé de sélection de la valeur d'une limitation de vitesse selon l'invention, mis en oeuvre par le régulateur de vitesse illustré sur la figure 2.

Pour rappel, l'invention propose un régulateur de vitesse apte à mettre en oeuvre un procédé de sélection de la valeur d'une limitation de vitesse, moins contraignant pour le conducteur d'un véhicule automobile et plus sûr par rapport à l'état de la technique.

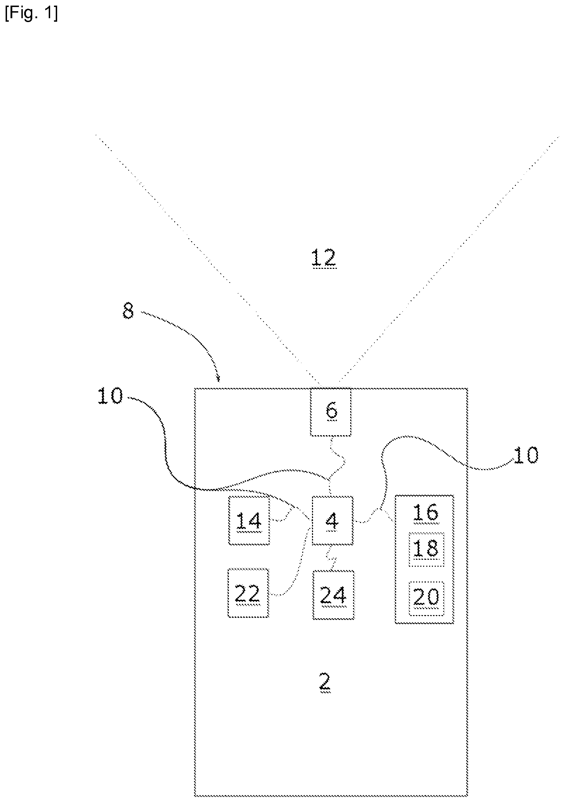

La figure 1 illustre une représentation schématique d'un véhicule automobile 2 comprenant un régulateur de vitesse 4, apte à mettre en oeuvre un procédé de sélection de la valeur d'une limitation de vitesse conforme à l'invention.

Le régulateur de vitesse 4 est connecté à une caméra 6 placée au niveau de l'avant 8 du véhicule automobile 2. Par le terme "connecté", on entend la possibilité pour deux objets d'échanger de l'information comme des valeurs numériques et/ou analogiques, par l'intermédiaire d'un câblage électrique 10. La caméra 6 est orientée afin que son champ de vision 12 puisse détecter la présence d'un panneau de signalisation présent le long d'une voie de circulation empruntée par le véhicule automobile.

Le régulateur de vitesse 4 est également connecté à un module de géolocalisation 14 intégré au véhicule automobile 2, par l'intermédiaire d'un câblage électrique 10.

Le régulateur de vitesse 4 est aussi connecté à un module de consultation 16 d'une base de données, associant à une position de géolocalisation une valeur de limitation de vitesse. À titre d'exemple non limitatif, le module de consultation 16 peut comprendre une unité de mémorisation 18 électronique d'une telle base de données et/ou comprendre une unité de communication sans fil 20 permettant de consulter une telle base de données située à l'extérieur du véhicule automobile 2.

Le régulateur de vitesse 4 est également connecté au compteur de vitesse 22 du véhicule automobile 2, par l'intermédiaire d'un câblage électrique.

Le régulateur de vitesse 4 se différencie notamment de l'état de la technique, en ce qu'il est connecté à un capteur 24. Le capteur 24 est configuré et agencé pour détecter une volonté de la part du conducteur, d'accélérer l'allure du véhicule automobile. À titre d'exemple non limitatif, le capteur 24 peut être un poussoir à ressort comprenant un capteur de déplacement du poussoir, placé sous la pédale d'accélération du véhicule automobile, de manière à ce que le poussoir soit déplacé lorsque la position de la pédale d'accélération est modifiée.

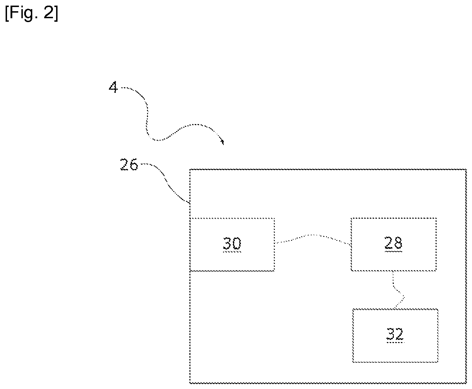

La figure 2 illustre à présent les différents éléments composant le régulateur de vitesse 4 visible sur la figure 1. Le régulateur de vitesse 4 comprend un boîtier 26 comprenant des circuits imprimés, de plusieurs circuits imprimés reliés par des connexions filaires ou non filaires, de tout type d'ordinateur ou encore d'un téléphone mobile. On entend par circuit imprimé tout type de dispositif apte à effectuer au moins une opération électrique ou électronique.

Le boîtier 26 comprend un processeur 28 de signal numérique, connecté par des moyens connus à une interface de connexion 30. L'interface de connexion 30 permet au processeur 28 d'être connecté aux éléments décrits ci-dessus. Le processeur 28 est également connecté une unité de mémorisation 32 électronique. L'unité de mémorisation 32 intègre les différentes étapes mises en oeuvre par le procédé de sélection de vitesse selon l'invention, tel que décrit ci-dessous. Le processeur 28 est agencé et paramétré pour effectuer fréquemment le procédé de sélection de vitesse mémorisé par l'unité de mémorisation 32, lorsque le véhicule automobile se déplace.

Il est à noter que le procédé selon l'invention est destiné à coopérer avec un procédé de limitation de vitesse connu de l'homme du métier, dont le fonctionnement a été rappelé succinctement ci-dessus.

Afin de permettre une meilleure compréhension de l'invention et de ses avantages, les différentes étapes mises en oeuvre par l'invention sont décrites dans le cas mentionné ci-dessus, où le véhicule automobile 2 circule sur une route comprenant plusieurs voies de circulation dans le même sens, séparées par un muret. La vitesse limite de circulation est par exemple de 90km/h pour les voies de circulation situées à gauche du muret, selon le sens de circulation, et de 50 km/h pour les voies de circulation situées à droite dudit muret. Un panneau de circulation rappelant la vitesse limite de circulation pour les voies de droite est présent sur le muret.

À l'approche du panneau de circulation, un véhicule automobile circulant sur une voie de circulation située à gauche du muret, doit donc respecter la vitesse limite de 90 km/h. Or, un régulateur de vitesse selon l'état de la technique impose au niveau du panneau de circulation un ralentissement brusque du véhicule automobile, afin de respecter la vitesse limite indiquée par le panneau de circulation situé sur le muret. Afin de maintenir l'allure du véhicule automobile, le conducteur est alors obligé de corriger la valeur de la vitesse limite du régulateur de vitesse. Pour cela, le conducteur doit sélectionner manuellement une nouvelle valeur de vitesse limite, en détournant son attention de la route au profit du régulateur de vitesse.

L'invention permet d'éviter ce ralentissement brusque, en proposant un régulateur de vitesse 4 tel que décrit ci-dessus, permettant au conducteur du véhicule automobile de conserver la valeur de la vitesse limite de circulation, précédemment mémorisée par le régulateur de vitesse, sans devoir détourner son attention de la route. Pour cela, le régulateur de vitesse 4 est apte à mettre en oeuvre les étapes décrites ci-dessous qui sont mémorisées par son unité de mémorisation 32.

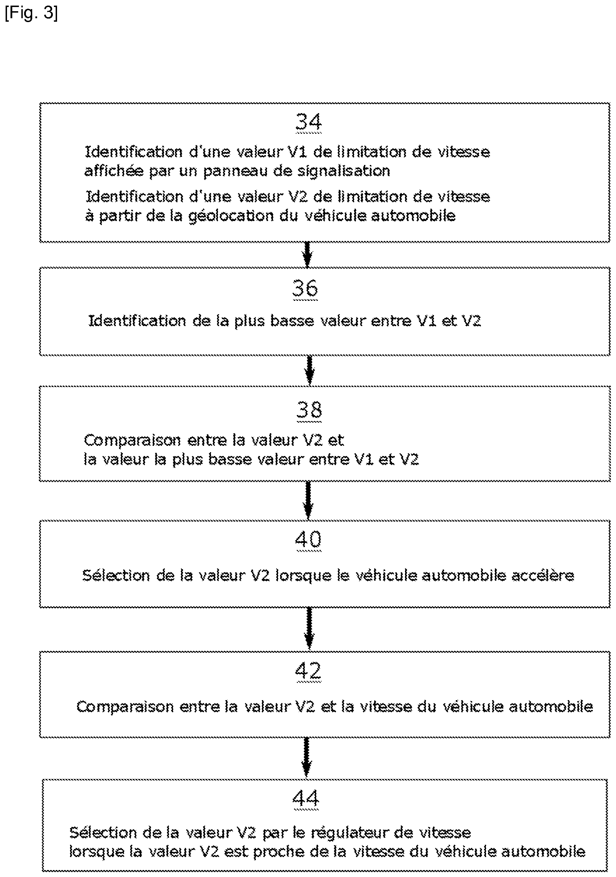

Selon une première étape 34 du procédé illustrée par la figure 3, le processeur 28 identifie à partir des images prises par la caméra 6, une première valeur V1 de limitation de vitesse indiquée sur le panneau de signalisation présent sur le muret, dans le cas présent 50 km/h. Le processeur 28 interroge également le module de géolocalisation 14 ainsi que le module de consultation 16, afin d'associer à la position de géolocalisation actuelle du véhicule automobile 2 une valeur de limitation V2 de vitesse, dans le cas présent 90 km/h, correspondant à la vitesse limite autorisée sur les voies de circulation situées à gauche du muret dans le sens de circulation.

Selon une deuxième étape 36, le processeur 28 compare ces deux valeurs de limitation de vitesse V1 et V2, et identifie la valeur de 50 km/h comme étant la valeur la plus basse de limitation de vitesse.

Selon une troisième étape 38, le processeur 28 compare la valeur la plus basse identifiée, avec la valeur de limitation V2 de vitesse indiquée par le module de consultation 16 : 90 km/h.

Selon une quatrième étape 40, conditionnée à l'identification par le capteur 24, d'un appui du pied du conducteur du véhicule automobile 2 sur la pédale d'accélération, afin d'augmenter la vitesse du véhicule automobile, le processeur 28 sélectionne la valeur de limitation de vitesse la plus élevée V2, dans le cas présent 90 km/h.

Selon une cinquième étape 42, le processeur 28 compare la vitesse actuelle du véhicule automobile, dans le cas présent 86 km/h, avec la valeur de limitation la plus élevée V2.

Selon une sixième étape 44, si cette différence est inférieure à une valeur seuil Vs comprise entre 95% et 105% de la valeur de limitation la plus élevée V2, ce qui est le cas selon le présent exemple, le régulateur de vitesse 4 sélectionne la valeur de limitation la plus élevée V2 comme valeur de consigne.

L'invention permet ainsi au conducteur du véhicule automobile de corriger un changement de la valeur de consigne du régulateur de vitesse 4, due à une mauvaise interprétation par le régulateur de vitesse de panneaux de signalisation présents le long du trajet, en actionnant simplement la pédale d'accélération, pour ne pas avoir à détourner son attention de la route. L'invention propose de ce fait un régulateur de vitesse apte à mettre en oeuvre un procédé de sélection de la valeur d'une limitation de vitesse simple et rapide à mettre en oeuvre par le conducteur d'un véhicule automobile.

## Revendications

1. Procédé de sélection de la valeur d'une limitation de vitesse, pour un régulateur de vitesse d'un véhicule terrestre, le procédé mettant en oeuvre les étapes suivantes :
- identification d'une première valeur (V2) de limitation de vitesse à partir d'une position de géolocalisation et d'une base de données associant à une position de géolocalisation une valeur de limitation de vitesse ;
- identification d'une seconde valeur (V1) de limitation de vitesse à partir d'au moins une image d'un panneau de signalisation de limitation de vitesse ;
- identification de la valeur de limitation de vitesse la plus basse entre la première valeur (V2) et la seconde valeur (V1) de limitation de vitesse ;
le procédé étant **caractérisé en ce qu'**il met en oeuvre l'étape suivante :
- sélection de la valeur de limitation de vitesse la plus élevée entre la première valeur (V2) et la seconde valeur (V1) de limitation de vitesse identifiée, lorsque la pédale d'accélération est actionnée afin d'augmenter la vitesse du véhicule terrestre et que la différence entre la valeur de la vitesse du véhicule terrestre et la valeur de limitation de vitesse la plus élevée identifiée est inférieure à une valeur seuil (Vs).

2. Procédé de sélection de la valeur d'une limitation de vitesse selon la revendication 1, **caractérisé en ce que** la valeur seuil (Vs) est comprise entre 95% et 105% de la valeur de limitation de vitesse la plus élevée identifiée.

3. Procédé de sélection de la valeur d'une limitation de vitesse selon la revendication 1 ou 2, **caractérisé en ce que** la valeur de limitation de vitesse sélectionnée est transmise à un régulateur de vitesse d'un véhicule terrestre, afin de limiter la vitesse de déplacement d'un véhicule terrestre à cette valeur sélectionnée.

4. Programme informatique comportant des instructions pour la mise en oeuvre d'un procédé de sélection selon l'une des revendications précédentes, lorsque ces instructions sont exécutées par un processeur (28).

5. Régulateur de vitesse (4) pour un véhicule terrestre comprenant un processeur (28) et une unité de mémorisation (32), l'unité de mémorisation (32) comprenant les étapes suivantes d'un procédé de sélection de la valeur d'une limitation de vitesse :
- identification d'une première valeur (V2) de limitation de vitesse à partir d'une position de géolocalisation et d'une base de données associant à une position de géolocalisation une valeur de limitation de vitesse ;
- identification d'une seconde valeur (V1) de limitation de vitesse à partir d'au moins une image d'un panneau de signalisation de limitation de vitesse ;
- identification de la valeur de limitation de vitesse la plus basse entre la première valeur (V2) et la seconde valeur (V1) de limitation de vitesse ;
le régulateur de vitesse (4) étant **caractérisé en ce que** l'unité de mémorisation (32) comprend l'étape suivante d'un procédé de sélection de la valeur d'une limitation de vitesse :
- sélection de la valeur de limitation de vitesse la plus élevée entre la première valeur (V2) et la seconde valeur (V1) de limitation de vitesse identifiée, lorsque la pédale d'accélération est actionnée afin d'augmenter la vitesse du véhicule terrestre et que la différence entre la valeur de la vitesse du véhicule terrestre et la valeur de limitation de vitesse la plus élevée identifiée est inférieure à une valeur seuil (Vs) ; et **en ce que** le processeur (28) est apte à mettre en oeuvre les étapes du procédé mémorisées par l'unité de mémorisation (32).

6. Régulateur de vitesse selon la revendication 5, **caractérisé en ce que** le processeur (28) est connecté à:
- un module de géolocalisation (14) ; et
- une caméra (6); et
- un module de consultation (16) d'une base de données associant à une position de géolocalisation, une valeur de limitation de vitesse ; et
- un capteur (24) de la position d'une pédale d'accélération d'un véhicule terrestre.

7. Véhicule terrestre **caractérisé en ce qu'**il comprend un régulateur de vitesse selon la revendication 5 ou 6.

8. Véhicule automobile **caractérisé en ce qu'**il comprend un régulateur de vitesse selon la revendication 5 ou 6.

## Patentansprüche

1. Verfahren zur Auswahl des Werts einer Geschwindigkeitsbegrenzung für einen Geschwindigkeitsregler eines Landfahrzeugs, wobei das Verfahren die folgenden Schritte ausführt:
- Identifizierung eines ersten Geschwindigkeitsgrenzwertes (V2) aus einer Geolokalisierungsposition und einer Datenbank, die einen Geschwindigkeitsbegrenzungswert mit einer Geolokalisierungsposition verknüpft;
- Ermitteln eines zweiten Geschwindigkeitsbegrenzungswerts (V1) aus mindestens einem Bild eines Geschwindigkeitsbegrenzungsschilds;
- Ermittlung des niedrigsten Geschwindigkeitsgrenzwerts zwischen dem ersten Geschwindigkeitsgrenzwert (V2) und dem zweiten Geschwindigkeitsgrenzwert (V1);
wobei das Verfahren **dadurch gekennzeichnet ist, dass** es den folgenden Schritt ausführt:
- Auswahl des höchsten Geschwindigkeitsgrenzwerts zwischen dem ersten ermittelten Geschwindigkeitsgrenzwert (V2) und dem zweiten Wert (V1), wenn das Fahrpedal betätigt wird, um die Geschwindigkeit des Landfahrzeugs zu erhöhen, und dass die Differenz zwischen dem Wert von die Geschwindigkeit des Landfahrzeugs und der höchste ermittelte Geschwindigkeitsgrenzwert kleiner als ein Schwellenwert (Vs) ist.

2. Verfahren zur Auswahl des Wertes einer Geschwindigkeitsbegrenzung nach Anspruch 1, **dadurch gekennzeichnet, dass** der Schwellenwert (Vs) zwischen 95 % und 105 % des höchsten ermittelten Geschwindigkeitsbegrenzungswerts liegt.

3. Verfahren zur Auswahl des Werts einer Geschwindigkeitsbegrenzung nach Anspruch 1 oder 2, **dadurch gekennzeichnet, dass** der ausgewählte Geschwindigkeitsgrenzwert an einen Geschwindigkeitsregler eines Landfahrzeugs übermittelt wird, um die Bewegungsgeschwindigkeit eines Bodenfahrzeugs zu begrenzen bei diesem ausgewählten Wert.

4. Computerprogramm mit Anweisungen zur Implementierung eines Auswahlverfahrens nach einem der vorhergehenden Ansprüche, wenn diese Anweisungen von einem Prozessor (28) ausgeführt werden.

5. Tempomat (4) für ein Landfahrzeug umfassend einen Prozessor (28) und eine Speichereinheit (32), wobei die Speichereinheit (32) die folgenden Schritte eines Werteauswahlverfahrens einer Geschwindigkeitsbegrenzung umfasst:
- Identifizierung eines ersten Geschwindigkeitsgrenzwertes (V2) aus einer Geolokalisierungsposition und einer Datenbank, die einen Geschwindigkeitsbegrenzungswert mit einer Geolokalisierungsposition verknüpft;
- Ermitteln eines zweiten Geschwindigkeitsbegrenzungswerts (V1) aus mindestens einem Bild eines Geschwindigkeitsbegrenzungsschilds;
- Ermittlung des niedrigsten Geschwindigkeitsgrenzwerts zwischen dem ersten Geschwindigkeitsgrenzwert (V2) und dem zweiten Geschwindigkeitsgrenzwert (V1); wobei der Geschwindigkeitsregler (4) **dadurch gekennzeichnet ist, dass** die Speichereinheit (32) den folgenden Schritt eines Verfahrens zum Auswählen des Wertes einer Geschwindigkeitsbegrenzung umfasst:
- Auswahl des höchsten Geschwindigkeitsgrenzwerts zwischen dem ersten ermittelten Geschwindigkeitsgrenzwert (V2) und dem zweiten Wert (V1), wenn das Fahrpedal betätigt wird, um die Geschwindigkeit des Landfahrzeugs zu erhöhen, und dass die Differenz zwischen dem Wert von die Geschwindigkeit des Landfahrzeugs und der höchste ermittelte Geschwindigkeitsgrenzwert unter einem Schwellenwert (Vs) liegen;
und dass der Prozessor (28) in der Lage ist, die von der Speichereinheit (32) gespeicherten Schritte des Verfahrens umzusetzen.

6. Geschwindigkeitsregler nach Anspruch 5, **dadurch gekennzeichnet, dass** der Prozessor (28) verbunden ist mit:
- ein Geolokalisierungsmodul (14); Und
- eine Kamera (6); Und
- ein Abfragemodul (16) einer Datenbank, das einer Geolokalisierungsposition einen Geschwindigkeitsgrenzwert zuordnet; Und
- einen Sensor (24) für die Stellung eines Fahrpedals eines Landfahrzeugs.

7. Landfahrzeug **dadurch gekennzeichnet, dass** es einen Geschwindigkeitsregler nach Anspruch 5 oder 6 umfasst.

8. Kraftfahrzeug **dadurch gekennzeichnet, dass** es einen Tempomaten nach Anspruch 5 oder 6 umfasst.

## Claims

1. Method for selecting the value of a speed limit, for a speed regulator of a land vehicle, the method implementing the following steps:
- identification of a first speed limit value (V2) from a geolocation position and a database associating a speed limit value with a geolocation position;
- identification of a second speed limit value (V1) from at least one image of a speed limit sign;
- identification of the lowest speed limit value between the first speed limit value (V2) and the second speed limit value (V1);
the process being **characterized in that** it implements the following step:
- selection of the highest speed limit value between the first identified speed limit value (V2) and the second value (V1), when the accelerator pedal is actuated in order to increase the speed of the land vehicle and that the difference between the value of the speed of the land vehicle and the highest speed limit value identified is less than a threshold value (Vs).

2. Method for selecting the value of a speed limit according to claim 1, **characterized in that** the threshold value (Vs) is between 95% and 105% of the highest speed limit value identified .

3. Method for selecting the value of a speed limit according to claim 1 or 2, **characterized in that** the selected speed limit value is transmitted to a speed regulator of a land vehicle, in order to limit the movement speed of a ground vehicle at this selected value.

4. Computer program comprising instructions for implementing a selection method according to one of the preceding claims, when these instructions are executed by a processor (28).

5. Cruise control (4) for a land vehicle comprising a processor (28) and a storage unit (32), the storage unit (32) comprising the following steps of a value selection method a speed limit:
- identification of a first speed limit value (V2) from a geolocation position and a database associating a speed limit value with a geolocation position;
- identification of a second speed limit value (V1) from at least one image of a speed limit sign;
- identification of the lowest speed limit value between the first speed limit value (V2) and the second speed limit value (V1); the speed regulator (4) being **characterized in that** the storage unit (32) comprises the following step of a method for selecting the value of a speed limitation:
- selection of the highest speed limit value between the first identified speed limit value (V2) and the second value (V1), when the accelerator pedal is actuated in order to increase the speed of the land vehicle and that the difference between the value of the speed of the land vehicle and the highest speed limit value identified is less than a threshold value (Vs);
and **in that** the processor (28) is able to implement the steps of the method stored by the storage unit (32).

6. Speed regulator according to claim 5, **characterized in that** the processor (28) is connected to:
- a geolocation module (14); And
- a camera (6); And
- a consultation module (16) of a database associating with a geolocation position, a speed limit value; And
- a sensor (24) for the position of an accelerator pedal of a land vehicle.

7. Land vehicle **characterized in that** it comprises a speed regulator according to claim 5 or 6.

8. Motor vehicle **characterized in that** it comprises a cruise control according to claim 5 or 6.
